# EUROPEAN PATENT APPLICATION

(11) **EP 3 176 743 A1**
(43) Date of publication of application: **07.06.2017**
(21) Application number: 15828102.2
(22) Date of filing: 15.05.2015
(51) Int. Cl.: G06Q 30/02, G06Q 30/06

(54) **STATISTICAL-DATA-GENERATING SERVER DEVICE, STATISTICAL-DATA GENERATION SYSTEM, AND STATISTICAL-DATA GENERATION METHOD**

(30) Priority: 31.07.2014 JP 2014155780
(71) Applicant: Fujifilm Corporation, Minato-ku Tokyo 106-8620 (JP)
(72) Inventor: YONAHA, Makoto, Tokyo 107-0052 (JP)
(74) Representative: Klunker . Schmitt-Nilson . Hirsch
(86) International application number: PCT/JP2015/064082
(87) International publication number: WO 2016/017241

(57) **Abstract**

The present invention provides a statistical data generation server device, a statistical data generation system, and a statistical data generation method in which statistical data that is accurate and easy to view, in which an operation history of a user is reflected, is generated. A statistical data generation server device (10) according to a preferred embodiment of the present invention includes a server reception unit (24), an accumulation unit (25) that accumulates an operation history of products corresponding to a user operation received by the server reception unit (24), a population generation unit (27) that generates a population for generating statistical data, the population being a population consisting of the products, on the basis of the operation history accumulated in the accumulation unit (25), a design feature amount acquisition unit (29) that acquires a design feature amount obtained by analyzing an image of the product for each product included in the population generated by the population generation unit (27), and a statistical data generation unit (31) that generates statistical data obtained by classifying the products on the basis of the design feature amount acquired for each product, the statistical data being statistical data indicating a frequency distribution obtained by classifying the products according to the design feature amount.

## Description

### BACKGROUND OF THE INVENTION

### 1. Field of the Invention

The present invention relates to a statistical data generation server device, a statistical data generation system, and a statistical data generation method, and particularly, to a statistical data generation server device, a statistical data generation system, and a statistical data generation method regarding design feature amounts of products handled in an electronic commerce.

### 2. Description of the Related Art

In recent years, electronic commerce using the Internet has been actively conducted. In a case where products such as clothing are sold at an electronic commerce (EC) site on the Internet, a user views an image obtained by imaging a product (hereinafter referred to as a "product image") listed on a website and purchases a desired product.

On the other hand, since products such as clothing depends on trend, information on sales trend of the products is information that is very effective when a user examines purchase of products. Further, for a store (providing source) of products, information on sales trend of products is information that is very effective in a case where a development strategy of products is established.

A technology for acquiring a correlation between a product and a sales trend of the product and applying the acquired correlation to various things has been conventionally considered.

JP2010-277391A describes a technology for associating information on color of industrial products with sales information such as the sold number of industrial products to generate a color space and using the color space to design appearance color.

JP2008-176366A describes a technology for using a physical parameter of clothing, coordination information, store information, and a preference or purchase history information of a clothing buyer, for management of coordination or sales strategies.

### SUMMARY OF THE INVENTION

However, in the technologies described in JP2010-277391A and JP2008-176366A, it is not considered that a feature amount regarding a design (hereinafter referred to as a "design feature amount") of a product is automatically acquired through image analysis. Therefore, in the technologies described in JP2010-277391A and JP2008-176366A, in a case where a large number of (for example, several thousand of to several hundreds of thousands of) various types of products are handled, enormous effort is required to link the design feature amount of each product to the product. Further, it is possible to acquire objective data by measuring the design feature amount through image analysis. Therefore, in the technologies described in JP2010-277391A and JP2008-176366A, it is difficult for statistical data regarding the feature amount of the design of the product to be obtained rapidly and accurately.

Further, in the technologies described in JP2010-277391A and JP2008-176366A, it is not considered that products are classified according to a feature amount regarding designs of the products and statistical data is generated. Therefore, in the technologies described in JP2010-277391A and JP2008-176366A, in a case where a large number of various types of (for example, several thousand of to several hundreds of thousands of) products are handled, it may be difficult for acquired statistical data to be viewed (understood) without organization.

Currently, various products have been traded on the Internet. In particular, there are a wide variety of designs of apparel such as clothing. For example, the design of the apparel has various colors, color combinations, a pattern, or a shape, and is complicated as compared with other products. Further, a large number of apparel products have been handled on the Internet. For example, there is also a web site at which several hundreds of thousands of products are handled. Thus, in the technologies described in JP2010-277391A and JP2008-176366A in which it is not considered that a design feature amount is acquired through image analysis, particularly, statistical data may not be successfully generated for a design feature amount regarding apparel such as clothing.

Further, in the technologies described in JP2010-277391 A and JP2008-176366A, it is not considered that an operation history on the Internet of the user is reflected in the statistical data. In particular, an operation history of the user other than purchase of a product may be useful to generate statistical data from which trend of products or popular products are recognized.

The present invention has been made in view of such circumstances, and its object is to provide a statistical data generation server device, a statistical data generation system, and a statistical data generation method in which statistical data that is accurate and easy to view, in which an operation history of a user is reflected, is generated.

A statistical data generation server device according to an aspect of the present invention comprises: a server reception unit that receives a user operation on a network with respect to products in an electronic commerce; an accumulation unit that accumulates an operation history of the products corresponding to the user operation received by the server reception unit; a population generation unit that generates a population for generating statistical data, the population being a population consisting of the products, on the basis of the operation history accumulated in the accumulation unit; a design feature amount acquisition unit that acquires a design feature amount obtained by analyzing an image of the product for each product included in the population generated by the population generation unit; and a statistical data generation unit that generates statistical data obtained by classifying the products on the basis of the design feature amount acquired for each product, the statistical data being statistical data indicating a frequency distribution obtained by classifying the products according to the design feature amount.

According to this aspect, since the generation of the statistical data is performed on the basis of the design feature amount obtained by analyzing the image of the product, it is possible to rapidly generate accurate statistical data even in a case where statistical data regarding a large number of products is generated. Further, according to this aspect, since the statistical data is generated by classifying products on the basis of the design feature amount obtained by analyzing the image of the product, it is possible to generate statistical data that is easy to view (easy to understand). Further, according to this aspect, since the population is generated on the basis of the operation history of the user and the statistical data is generated on the basis of the population, it is possible to generate statistical data from which a correlation between the user operation and the design feature amount of the product can be recognized.

Preferably, the statistical data generation server device further comprises a product database that registers and updates product information regarding at least products on sale.

According to this aspect, since the product database including the product information of the product is included, it is possible to generate the statistical data more rapidly.

Preferably, the server reception unit receives an operation including at least one of a product order operation, a coordination operation for performing a combination of a plurality of products, an operation for registration in favorites of products, an operation for viewing detailed information of a product, an operation indicating high evaluation of a product, an operation for recommendation to others, or an operation for registration in a shopping cart.

According to the present aspect, statistical data according to an operation of a user including at least one of the product order operation, coordination information indicating a combination of a plurality of products, an operation for registration in favorites of products, an operation for viewing detailed information of a product, an operation indicating high evaluation of a product, an operation for recommendation to others, or an operation for registration in a shopping cart is generated. Thus, in this aspect, it is possible to generate statistical data from which a correlation between the various user operations and the design feature amount can be recognized.

Preferably, store information of the product is linked to the product, and the population generation unit generates the population on the basis of the store information.

According to this aspect, since the product is linked to the store information, it is possible to generate statistical data regarding a design feature amount of a product handled in the store. Thus, in this aspect, it is possible to generate statistical data from which a correlation between the store and the design feature amount can be recognized. Here, the link to the store information of the product refers to a state in which "information (data) for specifying a product" and "information (data) on a shop where the product is sold" are associated with each other, stored, and held. For example, such information may be stored in the above-described product database.

Preferably, the statistical data generation unit generates statistical data for each of a plurality of pieces of store information.

According to this aspect, since the statistical data is generated for each of a plurality of pieces of store information, it is possible to compare the statistical data among a plurality of stores.

Preferably, the store information linked to the product is information on an apparel-related store.

Preferably, sales strategy information of the product is linked to the product, and the population generation unit generates the population on the basis of the sales strategy information.

According to this aspect, since the product is linked to the sales strategy information, the statistical data of the population of the product according to the sales strategy information is generated. Thus, in this aspect, it is possible to generate the statistical data from which a correlation between the sales strategy information and the design feature amount of the product can be recognized.

Preferably, the statistical data generation server device further comprises a product database that registers and updates product information regarding at least products on sale, in which the product information registered in the product database includes identification information of the product, an image of the product, and the design feature amount obtained by analyzing the image of the product, and the design feature amount acquisition unit acquires the design feature amount associated with the identification information of the product from the product database on the basis of the identification information of the product included in the population generated by the population generation unit.

According to this aspect, since the design feature amount associated with the identification information of the product constituting the population, which is registered in the product database, is acquired, it is possible to rapidly acquire a design feature amount of a selected product. Thus, in this aspect, it is possible to rapidly perform generation of accurate statistical data.

Preferably, the design feature amount includes at least one of a physical amount of an image of the product or information on a sensitivity word associated with the physical amount.

According to this aspect, since the design feature amount includes the physical amount of the image of the product or information on the sensitivity word associated with the physical amount, it is possible to generate statistical data based on the physical amount of the image of the product or the sensitivity word.

Preferably, the physical amount of the image of the product includes at least one of information on color of the product, information on a pattern of the product, information on a texture of the product, or information on a shape of the product.

According to this aspect, since the physical amount includes at least one of information on color of the product, information on a pattern of the product, information on a texture of the product, or information on a shape of the product, it is possible to generate statistical data corresponding to various designs of the product.

Preferably, the design feature amount acquisition unit acquires the design feature amount again for the population for which the statistical data has been already generated, and the statistical data generation unit generates statistical data again for the population for which the statistical data has been already generated on the basis of the design feature amount acquired in the design feature amount acquisition unit.

According to this aspect, since the statistical data is generated again for the population for which the statistical data is once generated, it is possible to generate updated statistical data in a case where there is a change in a design feature amount of a product group that constitute the population.

In a statistical data generation system according to another aspect of the present invention, the statistical data generation server device and a client terminal are connected via a network.

Since the statistical data generation system of this aspect includes the above-described statistical data generation server device connected to a client terminal over a network, it is possible to provide the above-described statistical data to a user even in a case where a place where there is the statistical data generation server device is separated from a place where there is the client terminal.

Preferably, the client terminal includes a display unit, and a display control unit that simultaneously displays the statistical data generated by the statistical data generation unit and a web page on a network on the display unit.

According to this aspect, since the client terminal includes the display unit and the display control unit, it is possible to simultaneously display the generated statistical data and a web page on a network on the display unit even in a case where a place where there is the statistical data generation server device is separated from a place where there is the client terminal.

Preferably, the display control unit display-controls the statistical data in a heat map display.

Preferably, the heat map display in which the display control unit display-controls has an axis of a sensitivity word.

According to this aspect, since the statistical data is displayed in a heat map display on the basis of an axis of a sensitivity word, it is possible to provide statistical data easier to view for the sensitivity word.

A statistical data generation method according to another aspect of the present invention comprises: a server reception step of receiving a user operation on a network with respect to products in an electronic commerce; an accumulation step of accumulating an operation history of the products corresponding to the user operation received in the server reception step; a population generation step of generating a population for generating statistical data, the population being a population consisting of the products, on the basis of the operation history accumulated in the accumulating step; a design feature amount acquisition step of acquiring a design feature amount obtained by analyzing an image of the product for each product included in the population generated in the population generation step; and a statistical data generation step of generating statistical data obtained by classifying the products on the basis of the design feature amount acquired for each product, the statistical data being statistical data indicating a frequency distribution obtained by classifying the products according to the design feature amount.

According to the present invention, since the generation of the statistical data is performed on the basis of the design feature amount obtained by analyzing the image of the product, it is possible to rapidly generate accurate statistical data. Further, according to the present invention, since products are classified according to the design feature amount and the statistical data is generated, it is possible to generate statistical data easily to see. Further, according to the present invention, since the population is generated on the basis of the operation history of the user, it is possible to generate statistical data from which a correlation between the operation history and the product can be recognized.

### BRIEF DESCRIPTION OF THE DRAWINGS

Fig. 1 is a conceptual diagram of a statistical data generation system.
Fig. 2 is a block diagram illustrating an example of a functional configuration of a statistical data generation server device.
Fig. 3 is a data structure conceptual diagram of data regarding an operation history to be accumulated in an operation history database.
Fig. 4 is a data structure conceptual diagram of data regarding a product to be stored in a product database.
Fig. 5 is a conceptual diagram illustrating a relationship between a sensitivity space and a physical measurement space.
Fig. 6 is a conceptual diagram illustrating an appearance of a client terminal.
Fig. 7 is a block diagram illustrating an functional configuration example of the client terminal.
Fig. 8 is a conceptual diagram illustrating an example of a display form of statistical data.
Fig. 9 is a flow diagram illustrating an example of an operation of the statistical data generation system.
Fig. 10 is a conceptual diagram illustrating an example of a display form of the statistical data.
Fig. 11 is a conceptual diagram illustrating an example of a display form of the statistical data.
Fig. 12 is a conceptual diagram illustrating an example of a display form of the statistical data.
Fig. 13 is a conceptual diagram illustrating an example of a display form of the statistical data.
Fig. 14 is a conceptual diagram illustrating an example of a display form of the statistical data.
Fig. 15 is a conceptual diagram illustrating an example of a display form of the statistical data.

### DESCRIPTION OF THE PREFERRED EMBODIMENTS

Hereinafter, specific embodiments of a statistical data generation server device, a statistical data generation system, and a statistical data generation method according to the present invention will be described with reference to the accompanying drawings. In the following embodiments, an example in which a product is "apparel and, particularly, clothing" will be described, but the prevent invention is not limited thereto, and the present invention is also applied to a case where statistical data of any other product is generated.

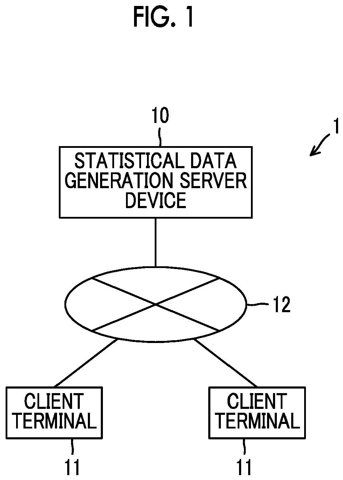

Fig. 1 is a conceptual diagram illustrating a statistical data generation system 1. The statistical data generation system 1 mainly includes a statistical data generation server device 10, and a client terminal 11, and the statistical data generation server device 10 and the client terminal 11 are connected via a network 12. Further, a plurality of client terminals 11 can be included via the network 12.

The network 12 connecting the statistical data generation server device 10 to the client terminal 11 is assumed to be a known network environment. A specific example of the network 12 may include the Internet.

Next, a function configuration of the statistical data generation server device 10 will be described.

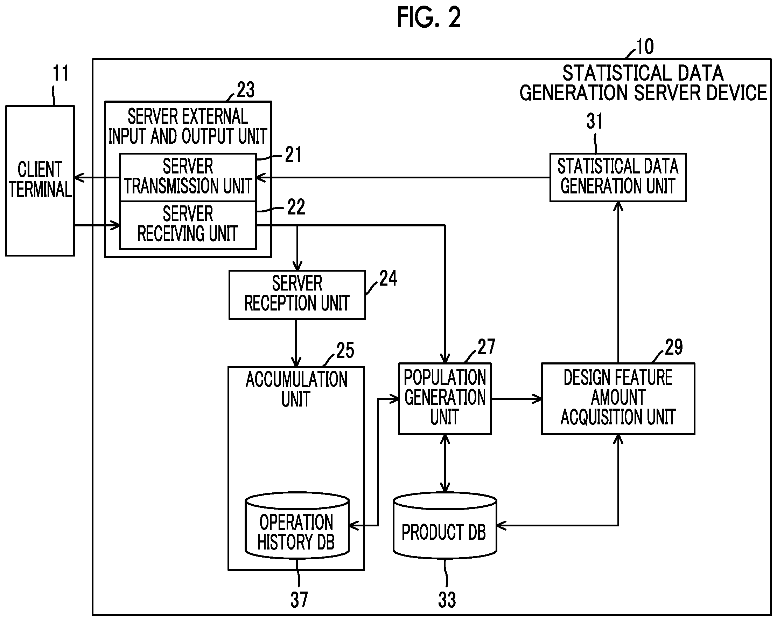

Fig. 2 is a block diagram illustrating a functional configuration example of the statistical data generation server device 10 of the statistical data generation system 1.

The statistical data generation server device 10 mainly includes a server external input and output unit 23 (a server transmission unit 21 and a server receiving unit 22), a server reception unit 24, an accumulation unit 25, a population generation unit 27, a design feature amount acquisition unit 29, a statistical data generation unit 31, a product database (also referred to as a "product DB") 33, and an operation history database (also referred to as "operation history DB") 37.

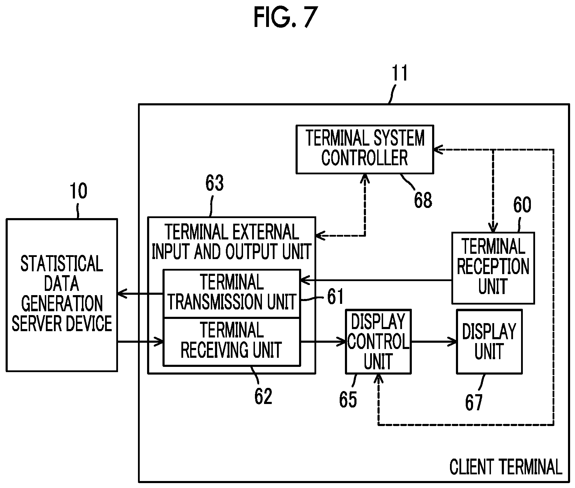

The server reception unit 24 receives data (signal) regarding a user operation to be transmitted from the client terminal 11. Here, the user operation refers to a user operation on the network with respect to a product in an electronic commerce. The user operation may be directly received by the terminal reception unit 60 of the client terminal 11 (see Fig. 7), and may be received as data regarding the user operation in the server reception unit 24 via the network 12.

The accumulation unit 25 stores an operation history regarding the user operation received by the terminal reception unit 60 of the client terminal 11 (see Fig. 7). For example, the accumulation unit 25 stores the operation history of the user operation in an operation history database 37.

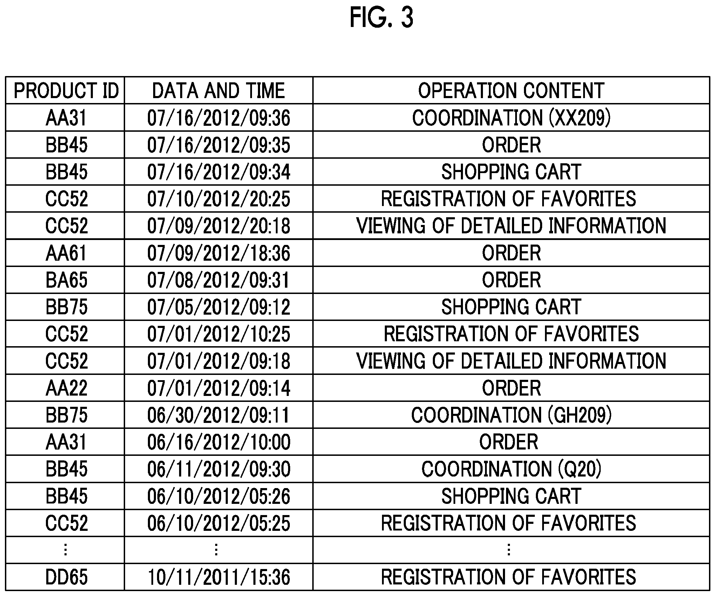

Fig. 3 is a diagram illustrating a data structure example of the data (operation history list) regarding the operation history stored in the operation history database 37.

As illustrated in Fig. 3, data regarding the operation history (operation history list) includes a product ID (product identification number) capable of specifying a product, date and time when the accumulation unit 25 receives the operation history, and content of the operation history. For example, the oldest history in the operation history list illustrated in Fig. 3 is an operation history shown at a bottom. In this operation history, it is shown that a product image (the product ID is "DD65") is displayed on the display unit 67 (see Fig. 7) of the client terminal 11, and the user selects the product image and performs an operation of favorites on 15:36, October 11, 2011. In this operation history list, when a new operation history is input, the new operation history is sequentially stacked. In the latest operation history, the user performs coordination of a product (the product ID is "AA31") and another product (the product ID is "XX209") on 09:36, July 16, 2012. Here, the product image is not particularly limited as long as the image is an image obtained by imaging a product. For example, the product image refers to an image that is used to present the product to the user (consumer) in a case where an electronic commerce is performed.

A structure of the data regarding the operation history is not limited to the example illustrated in Fig. 3 and, of course, other structures may also be adopted. For example, the data regarding the operation history may include information on one or a plurality of specific users (for example, a user who operates the client terminal 11). That is, the data regarding the operation history may include information on attributes of a user. The information on attributes of the user is, for example, a sex of the user, an age of the user, and a residence of the user. Thus, when the data regarding the operation history includes the attribute information of the user, data regarding the operation history in which the user operation is limited according to the attributes of the user is acquired.

Returning to Fig. 2, the population generation unit 27 generates a population on the basis of the operation history stored in the accumulation unit 25. Specifically, the population generation unit 27 generates a product group constituting the population by referring to the operation history illustrated in Fig. 3. For example, the population generation unit 27 may generate the population including all products listed in the operation history list or may generate the population using a product group of products on which a specific operation has been performed.

Here, the "population" refers to a collection of targets on which statistical processing for generating statistical data is performed. Specifically, the population is a product group with an operation history. For example, in a case where all products with an operation history are statistical processing targets, the population is a set of all the products with an operation history. Further, for example, in a case where products with an operation history "favorite registration" are the statistical processing targets, the population is a set of all the products with an operation history "favorite registration". Here, the "statistical data" is data indicating a frequency distribution of the design feature amounts of products constituting the population generated by the population generation unit 27.

A form of the population generated by the population generation unit 27 may be determined according to an instruction from the user or may be set in advance. That is, in a case where the user requests statistical data regarding products with an operation history using the terminal reception unit 60 of the client terminal 11, the population generation unit 27 sets all products with an operation history to a population. Further, in a case where statistical data of a product for which there is an operation of "favorite registration" has been set to be generated in advance, the population generation unit 27 sets a product with an operation history of "favorite registration" as a population. Further, in a case where the data regarding the operation history also includes information on attributes of the user, the population generation unit 27 sets, for example, products with the operation history of the user of a woman in her twenties living in a particular region as a population. Further, the population generation unit 27 can set, for example, tops with an operation history as a population since the data regarding the operation history has a product ID capable of specifying a product.

The design feature amount acquisition unit 29 acquires a design feature amount that is obtained by analyzing the product image of the product included in the population generated by the population generation unit 27. The design feature amount acquired by the design feature amount acquisition unit 29 is obtained by analyzing the product image using a known method. The design feature amount acquisition unit 29 may acquire a design feature amount of a product group constituting the population from the product database 33 or may acquire a design feature amount by performing image analysis on the product images of the product group constituting the population. The design feature amount will be describes below.

The statistical data generation unit 31 classifies the products on the basis of the design feature amount acquired for each product and generates statistical data indicating a frequency distribution that is obtained by classifying the products using the design feature amounts. Here, the classification of the products based on the design feature amount refers to grouping the products on the basis of the design feature amount. For example, in a case where products are classified according to the design feature amount of the color, dividing 1000 colors into 100 groups even when the number of colors of products in the population is 1000 from image analysis of the product image is referred to as classification. Thus, it is possible to generate the statistical data easy to view and easy to understand by performing classifying according to the design feature amount and generating the statistical data. The design feature amount acquisition unit 29 and the statistical data generation unit 31 described above can perform the processes again on the population for which the statistical data has been already generated. That is, in a case where the design feature amount is updated for the population for which the statistical data has been already generated, the design feature amount acquisition unit 29 acquires the design feature amount again, and the statistical data generation unit 31 generates the statistical data on the basis of the re-acquired design feature amount. Accordingly, it is possible to generate updated statistical data even in a case where there is a change in the design feature amount of the product constituting the population.

In the product database 33, at least product information on products on sale is registered. Further, the product information registered in the product database 33 can be updated by a manager of the product database 33 or a person with a right to access the product database 33. In the example illustrated in Fig. 2, the product database 33 is installed in the statistical data generation server device 10, but the present invention is not limited thereto. For example, the product database 33 is installed outside the statistical data generation server device 10 and connected to the statistical data generation server device 10 from the outside. Further, the statistical data generation server device 10 may use the product database of an EC site as the product database 33.

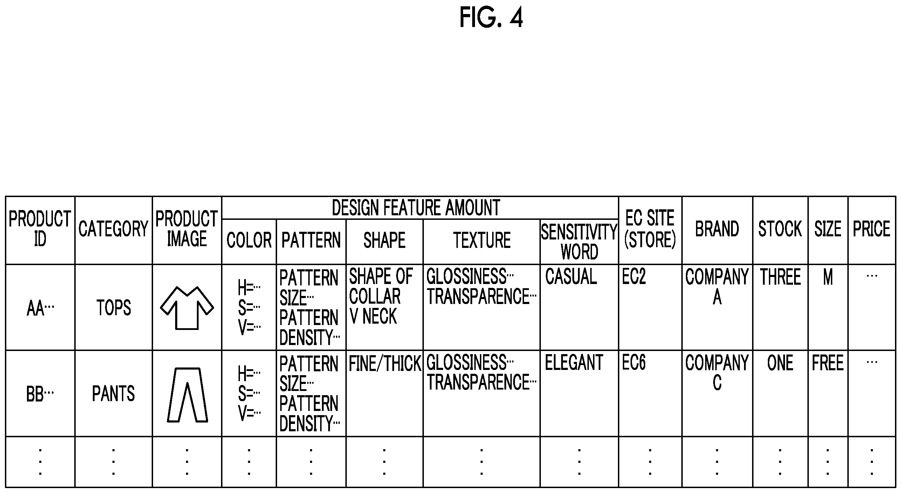

Fig. 4 is a data structure conceptual diagram of data regarding products to be stored in the product database 33. As illustrated in Fig. 4, information on "product ID", "category", "product image", "design feature amount", "EC site", "brand", "stock", "size", and "price" is registered as product information in the product database 33. Here, the "product ID" is unique identification information of each product similar to Fig. 3, and a different product ID may be applied if a providing source (a supplier, an EC site, or a store) is different for the same product. The "category" is a category of the product. Examples of the category include tops, pants, hats, and shoes, which are useful information when combined (coordinated) with other products. The "product image" is data of an image obtained by imaging a product.

The "design feature amount" includes, for example, a physical amount of a product image (information on color of the product, information on a pattern of the product, information on a shape of the product, and information on a texture of the product), and a sensitivity word associated with the physical amount. The information on "color" obtained by performing image analysis on the product image is indicated by H (hue), S (saturation), V (brightness), or RGB (red, green, blue).

The design feature amount regarding the "pattern" is indicated by, for example, a pattern size or a pattern density. The pattern size is a size of the pattern applied to the product, and is indicated by, for example, an area. Further, the pattern density indicates how much the pattern is densely arranged in a certain range and is indicated like, for example, "density is high" and "density is low".

The information on the "shape" is information on a characteristic shape of a product or a shape capable of identifying a product. For example, the information on the shape is information such as a shape of a collar, slender, or comfortable. The information on the "texture" is, for example, glossiness or transparence, and is information obtained by performing image analysis on a product image.

Thus, in a case where design feature amounts of the products are registered in association with the products in the product database 33, the design feature amount acquisition unit 29 can acquire design feature amounts of the products constituting a population from the product database 33.

Next, the information on the sensitivity word associated with the physical amount will be described. First, a relationship between the physical amount and the sensitivity word will be described.

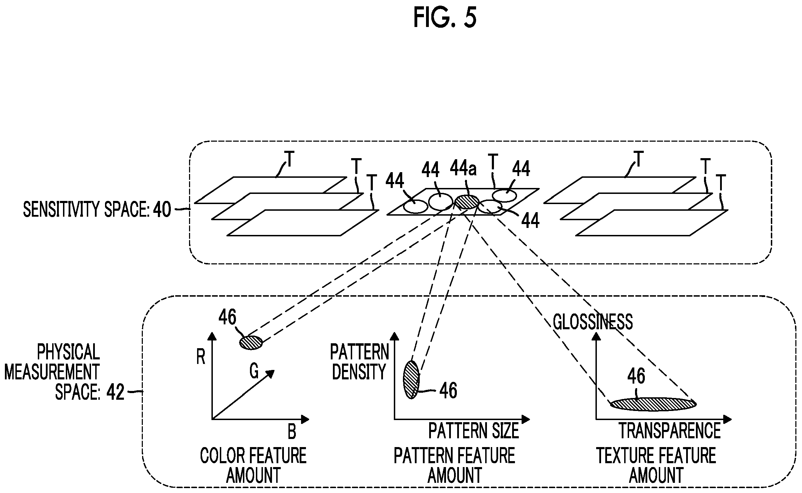

Fig. 5 is a conceptual diagram illustrating a relationship between a sensitivity space 40 and a physical measurement space 42. Conversion from the physical measurement space 42 into the sensitivity space 40 is performed by a conversion table T. That is, the conversion table T defines a region in the physical measurement space 42 (hereinafter referred to as a "physical amount region 46") corresponding to a region in the sensitivity space 40 (hereinafter referred to as a "sensitivity region 44"). As illustrated in Fig. 5, there is a sensitivity region 44 to be allocated to each sensitivity word in the sensitivity space 40, and there is a physical amount region 46 in the physical measurement space 42 corresponding to each sensitivity region 44. In the example illustrated in Fig. 5, in a case where a sensitivity word occupies a sensitivity region 44a, a specific physical amount region 46 in the physical measurement space 42 regarding a design feature amount of color, a design feature amount of a pattern, and a design feature amount of texture is associated with the sensitivity region 44a (see a hatched portion in Fig. 5).

The conversion table T defines an association between the sensitivity region 44 indicated in the sensitivity space 40 and the physical amount region 46 indicated in the physical measurement space 42, and is used to convert the data in the sensitivity space 40 into data in the physical measurement space 42.

In the example illustrated in Fig. 5, a "color feature amount defined by RGB (red, green, and blue) data", a "pattern feature amount defined by a pattern density and a pattern size", and a "texture feature amount defined by glossiness and transparence" are used as a reference for determining the physical amount region 46 in the physical measurement space 42, but the present invention is not limited thereto.

Information on the sensitivity word associated with the physical amount of the product image as described above is registered in the product database 33. That is, a sensitivity word obtained using the conversion table T from the physical amount obtained through image analysis from the product image is registered for each product in the product database 33.

Returning to Fig. 4, "EC site (store)", "brand", "stock", "size", and "price" for a product are registered in the product database 33. The product information is not limited to that illustrated in Fig. 4, and information on various other product may be registered. For example, sales strategy information of products may be registered in the product database 33. Here, the sales strategy information of the product is information on a method of selling products. For example, information indicating a product handled in "special clothing to wear in a summer festival" and "special clothing to wear in camp" is the sales strategy information.

Next, the client terminal 11 will be described.

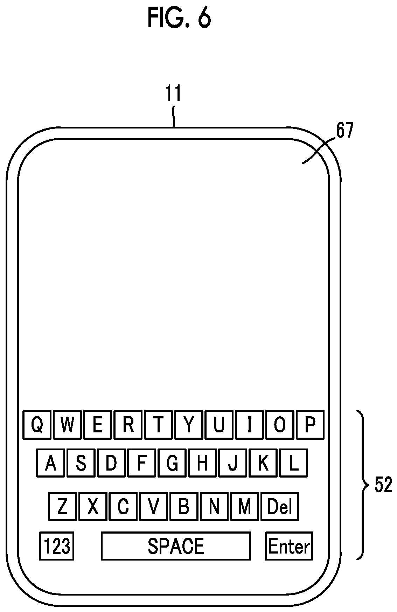

Fig. 6 is a conceptual diagram illustrating an appearance of the client terminal 11. The client terminal 11 mainly includes a display unit 67, a touch panel, and a keyboard unit 52. The display unit 67 is installed on a front surface of the client terminal 11, and the touch panel is installed according to the display unit 67. The touch panel and keyboard unit 52 function as the terminal reception unit 60 (see Fig. 7). Further, the client terminal 11 is a terminal which is operated when a user searches for and orders a product such as a clothing and is, for example, a portable terminal such as a smart phone or a tablet device, or a personal computer.

Fig. 7 is a block diagram illustrating a functional configuration example of the client terminal 11.

The client terminal 11 of this example mainly includes a terminal reception unit 60, a terminal external input and output unit 63 (a terminal transmission unit 61 and a terminal receiving unit 62), a display control unit 65, a display unit 67, and a terminal system controller 68.

The terminal reception unit 60 receives data regarding a user operation in the client terminal 11. Here, the user operation refers to all of operations performed on the client terminal 11. For example, the user operation includes a product order operation, a coordination operation for performing a combination of a plurality of products, an operation for registration in favorite products, an operation for viewing detailed information of a product, an operation indicating high evaluation of a product, an operation for recommendation to others, or an operation for registration in a shopping cart.

In a case where the client terminal 11 is a portable terminal such as a smartphone, buttons or a touch panel provided in the client terminal 11 can be used as the terminal reception unit 60. The user can input data using any scheme via the terminal reception unit 60, may directly input data, or may input data by selecting one or more desired items of data from among the plurality of candidates displayed on the display unit 67.

The terminal external input and output unit 63 has a function of outputting data to the statistical data generation server device 10 over the network 12 (terminal transmission portion 61) and receiving data from the statistical data generation server device 10 (terminal receiving unit 62).

The display control unit 65 controls the overall display of the display unit 67. For example, the display control unit 65 displays the product image data received by the terminal receiving unit 62 on the display unit 67. In this case, the display control unit 65 displays the product image transmitted from the statistical data generation server device 10 on the display unit 67.

Further, the display control unit 65 displays the statistical data transmitted from the statistical data generation server device 10 on the display unit 67. From the statistical data generation server device 10, information on the display form of the statistical data is also transmitted together with the statistical data, and the display control unit 65 displays the statistical data on the display unit 67 according to the information on the display form of the statistical data. Here, the information on the display form of the statistical data is information regarding a display of statistical data generated by the statistical data generation unit 31 and is, for example, information for displaying the statistical data in a heat map. The information on the display of the statistical data is generated by, for example, the statistical data generation unit 31. Further, the display control unit 65 can display a web page on the Internet on the display unit 67, and the display control unit 65 can simultaneously display the web page and the statistical data on the display unit 67. The display control unit 65 may display the statistical data to be superimposed on the display of the web page or may incorporate and display the statistical data while viewing a web page. Data of the web page is acquired from the statistical data generation server device 10, an EC site, or another server.

The terminal system controller 68 controls the terminal external input and output unit 63 (the terminal transmission unit 61 and the terminal receiving unit 62), and the terminal reception unit 60, and the display control unit 65 to cause the respective units to execute the above-described processes or other processes. The terminal system controller 68 also controls each unit (not illustrated) of the client terminal 11.

Next, a display form of statistical data will be described.

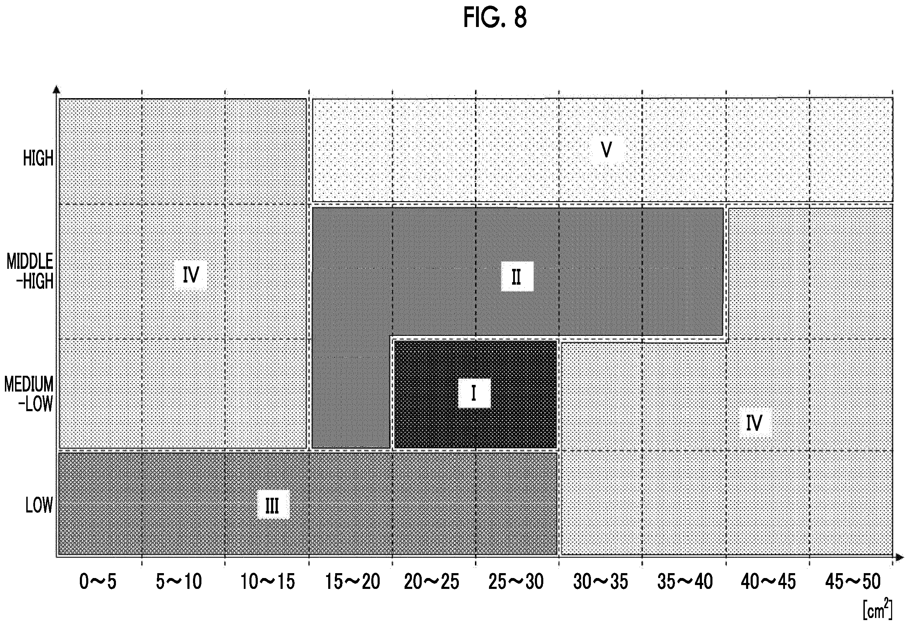

Fig. 8 is a conceptual diagram illustrating one form of a display of statistical data that is performed on the display unit 67 by the display control unit 65.

In Fig. 8, an example in which a relationship among a pattern size of a product, a pattern density of the product, and a frequency at which the product is ordered is indicated by a heat map is illustrated. On a horizontal axis, the pattern size of the product is indicated, and the pattern size is classified with increments of 5 cm². On a vertical axis, a pattern density of the product is indicated, and the pattern density is classified into "low", "medium-low", "middle-high", and "high". A frequency distribution of the pattern size and the pattern density of the product ordered by the user is indicated in Fig. 8.

A product with a pattern size and a pattern density shown in region "I" in Fig. 8 is most ordered. Then, the number of orders (order frequency) of a product with a pattern size and a pattern density shown in region "II" is large, the number of orders of a product with a pattern size and a pattern density shown in region "III" is larger, the number of orders of a product with a pattern size and a pattern density shown in region "IV" is larger, and the number of orders of a product with a pattern size and a pattern density shown in region "V" is smallest. The frequency shown in regions "I" to "V" can be arbitrarily set, and regions "I" to "V" may correspond to any value or may be a value having a certain width.

According to the heat map illustrated in Fig. 8, it can be seen that products with a pattern having a size of "20 to 25 cm²" and "25 to 30 cm²" and a density of "medium-low" are much ordered. On the other hand, it can be seen that products with a pattern having a size of "15 to 20 cm²", "20 to 25 cm²", "25 to 30 cm²", "35 to 40 cm²", "40 to 45 cm²", and "45 to 50 cm²" and a density of "high" are less ordered.

Thus, the population generation unit 27 generates a population on the basis of the order history of the user, and the statistical data generation unit 31 generates a frequency distribution and a heat map of the design feature amounts (a pattern size and a pattern density of the pattern) that products constituting the population have, and the heat map is displayed. Accordingly, it is possible to display the relationship between the design feature amount of the product and the order history so that it is easy for the relationship to be visually seen.

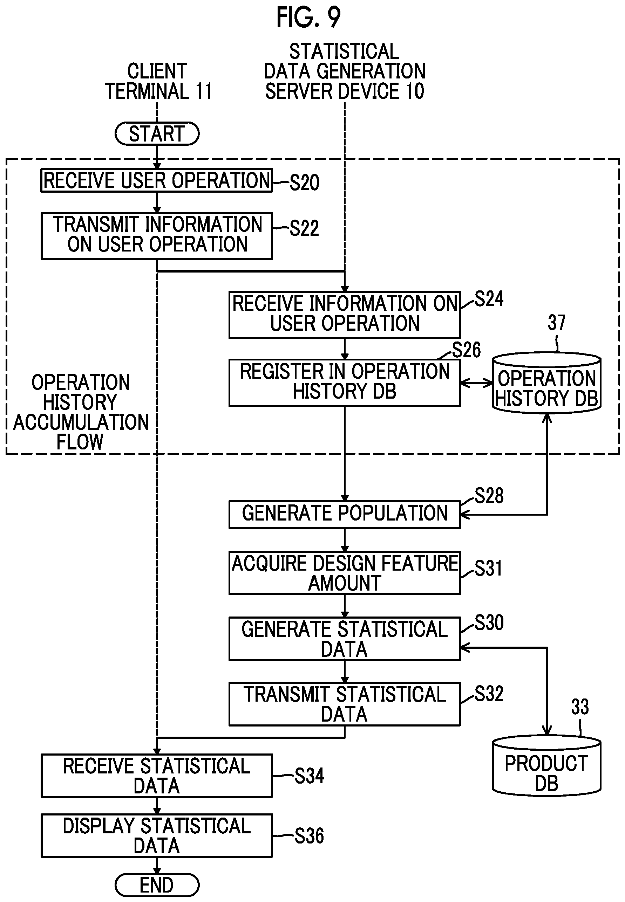

Fig. 9 is a flow diagram of an operation of the statistical data generation system 1. First, data regarding a user operation is received by the terminal reception unit 60 of the client terminal 11 (step S20: reception step). Thereafter, information indicated by the data regarding the user operation received by the terminal reception unit 60 is transmitted to the statistical data generation server device 10 by the terminal transmission unit 61 of the terminal external input and output unit 63 (step S22). The statistical data generation server device 10 receives the information on the user operation using the server receiving unit 22 of the server external input and output unit 23, and receives the data regarding the user operation using the server reception unit 24 (step S24: server reception step). Thereafter, the user operation is registered in the operation history database 37 by the accumulation unit 25 (step S26: accumulation step). An operation flow (operation history accumulation flow) from step S20 to step S26 described above is sequentially performed each time the client terminal 11 receives the data regarding the user operation using the terminal reception unit 60.

Thereafter, the population generation unit 27 generates a population on the basis of the operation history database 37 (step S28: population generating step). The design feature amount acquisition unit 29 acquires a design feature amount of a product constituting the population (step S31: design feature amount acquisition step). Then, the statistical data generation unit 31 generates the statistical data of the generated population (step S30: statistical data generation step). Thereafter, the server transmission unit 21 transmits the generated statistical data (step S32). Then, the terminal receiving unit 62 of the client terminal 11 receives the statistical data (step S34) and then, transmits the statistical data to the display control unit 65. The display control unit 65 displays the received statistical data on the display unit 67 (step S36).

As described above, according to the statistical data generation system 1 and the statistical data generation server device 10 of this embodiment, since the generation of the statistical data is performed on the basis of the design feature amount obtained by analyzing the image of the product, it is possible to rapidly generate accurate statistical data even in a case where statistical data regarding a large number of products is generated. Further, according to the statistical data generation system 1 and the statistical data generation server device 10 of this embodiment, since the statistical data indicating the frequency distribution is generated by classifying products on the basis of the design feature amount, it is possible to generate statistical data that is easy to view and easy to understand. Further, according to the statistical data generation system 1 and the statistical data generation server device 10 of this embodiment, since the population is generated on the basis of the operation history of the user and the statistical data is generated on the basis of the population, it is possible to generate statistical data from which a correlation between the user operation and the design feature amount can be recognized.

### (Other embodiments)

Next, other embodiments of the statistical data generation system 1 and the statistical data generation server device 10 will be described. The statistical data generation system 1 and the statistical data generation server device 10 of the present invention can adopt various embodiments.

The population generation unit 27 may generate a population based on store information which is information on a store handling products. That is, the population generation unit 27 may generate a product group serving as a population on the basis of the store information linked to the product. In this case, the population generation unit 27 generates a population on the basis of the operation history and the store information. Here, if the store information is linked to the product, the store information may be stored anywhere. For example, the store information may be stored in the product database 33 as described with reference to Fig. 4. Here, the store of the product is a providing source that handles the product, and a shop of various business types or business forms is assumed. For example, an apparel-related store is assumed as the store of the product.

Thus, the population generation unit 27 generates the population on the basis of the store information, and according to the statistical data generated according to the population, a correlation among the store, the user operation for the product in the store, and the design feature amount of the product in the store can be understood.

Further, the population generation unit 27 may generate the population on the basis of sales strategy information. That is, the population generation unit 27 may generate a product group serving as a population on the basis of the sales strategy information linked to a product. In this case, the population generation unit 27 generates a population on the basis of the operation history and the sales strategy information. Further, the population generation unit 27 may generate a population on the basis of the operation history, the store information, and the sales strategy information.

Thus, the population generation unit 27 generates the population on the basis of the sales strategy information, and according to the statistical data generated according to the population, the statistical data regarding the design feature amount of the product according to the sales strategy information and the operation history can be recognized.

### (Modification example of display aspect of statistical data)

Next, a modification example of a display form of statistical data will be described. The statistical data is displayed in various display forms in consideration of a population, use, a size of the display unit 67, or the like. Hereinafter, an example of the display form will be shown.

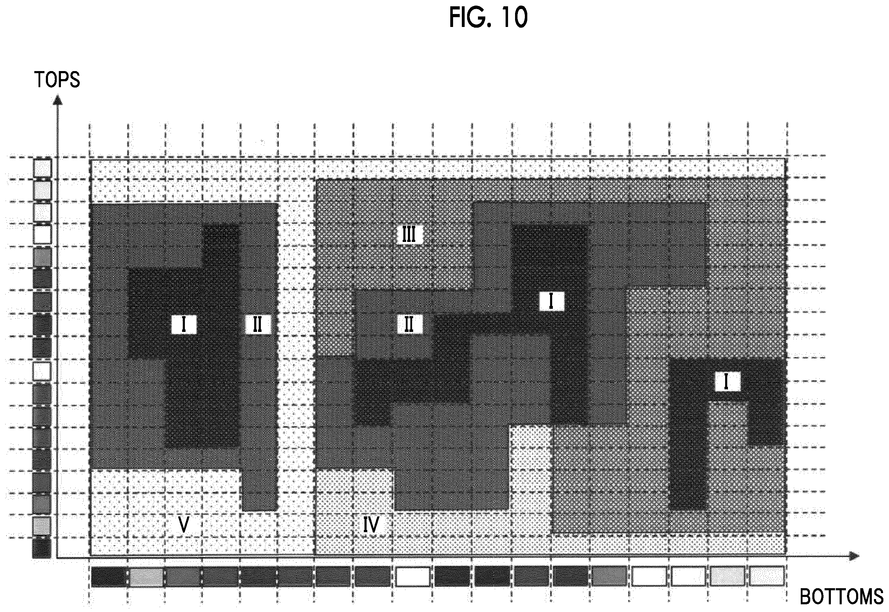

Fig. 10 is a heat map showing a combination of colors of products (bottoms and tops) used in a coordination operation of a user in a frequency distribution. On a horizontal axis, color of the bottoms used in the coordination operation is displayed using a color palette. On a vertical axis, color of the tops used in the coordination operation is displayed using a color palette. A frequency distribution of the colors of the product (bottoms and tops) used in coordination by the user is indicated in a heat map. It is possible to generate the statistical data easy to view by classifying and displaying colors bottoms and tops according to a specific number of color palettes, as illustrated in Fig. 10.

A frequency of a color combination between bottoms and tops shown in region "I" is highest. Next, a frequency of a color combination between bottoms and tops shown in region "II" is high. Next, a frequency of a color combination between bottoms and tops shown in region "III" is higher. Next, a frequency of a color combination between bottoms and tops shown in region "IV" is higher. Next, a frequency of a color combination between bottoms and tops shown in region "V" is lowest.

Thus, the population generation unit 27 generates the population on the basis of the coordination operation of the user, the statistical data generation unit 31 generates the frequency distribution of the design feature amount (the color of the product) that the product constituting the population has, and the statistical data thereof is displayed in the heat map. Thus, it is possible to display a relationship between the color of the product and the coordination operation so that the relationship is easy to be visually understood.

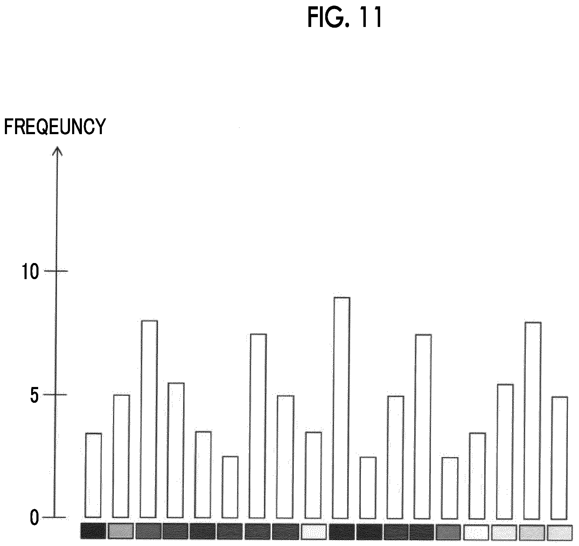

Fig. 11 is a graph illustrating colors of products on which an operation for registration in favorite of a user is performed in a frequency distribution. On a horizontal axis, colors of products on which the favorite registration operation is performed are indicated using a color palette. On a vertical axis, a frequency of the favorite registration operation is indicated. Thus, it is possible to recognize the colors of the products on which the favorite registration operation is frequently performed by classifying and indicating the colors of products on which the favorite registration operation is performed using a specific number of color palettes.

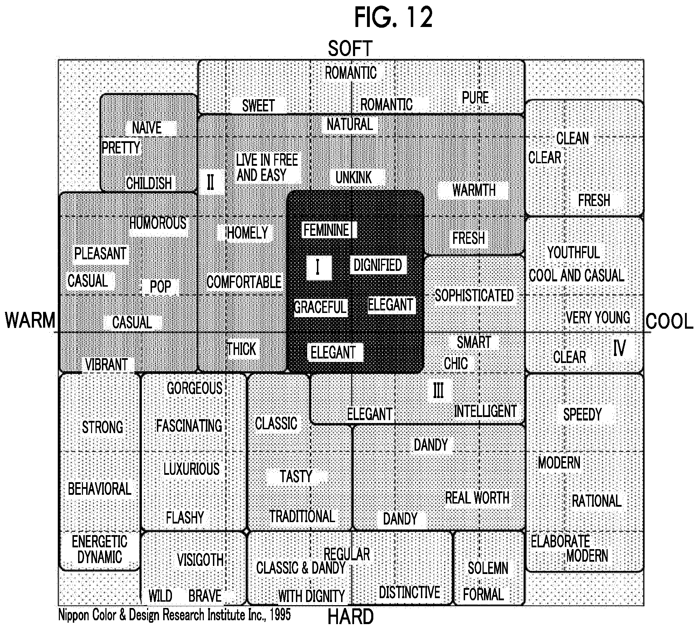

In Fig. 12, products are classified according to sensitivity words described with reference to Fig. 5, and a frequency distribution of a frequency at which a user has put products in a shopping cart is displayed using a heat map. As described with reference to Fig. 5, the physical amount of the product image and the sensitivity word can be associated with each other, and can be expressed, for example, in a space with an axis of sensitivity words as illustrated in Fig. 12. The frequency at which the user has put products in the shopping cart is indicated using the heat map by coloring the region in the space of sensitivity words.

Products with sensitivity words shown in region "I" are most put in the shopping cart. Next, products with sensitivity words shown in region "II" are much put in the shopping cart. Next, products with sensitivity words shown in region "III" are more put in the shopping cart, and products with sensitivity words shown in region "IV" are least put in the shopping cart.

Thus, the sensitivity word regarding the products put in the shopping cart are displayed in the sensitivity word space, and the frequency at which the products are put the shopping cart is displayed in the heat maps. Accordingly, it is possible to recognize a correlation between the products put in the shopping cart and the sensitivity words.

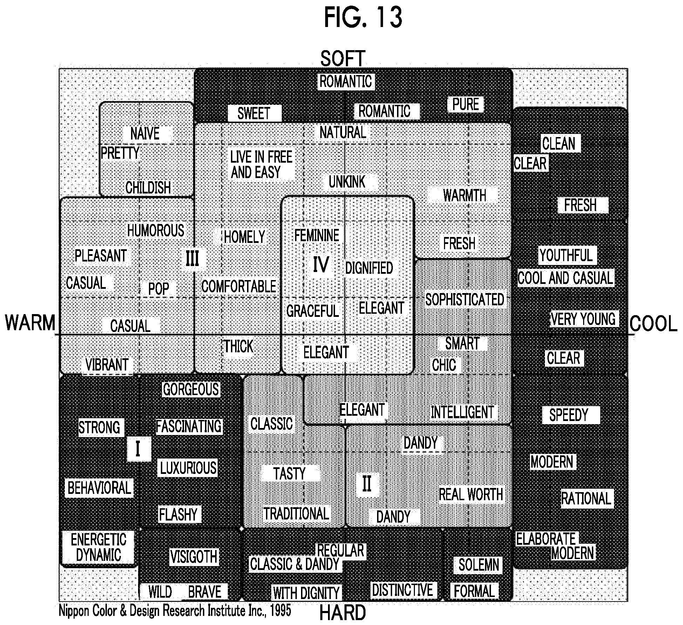

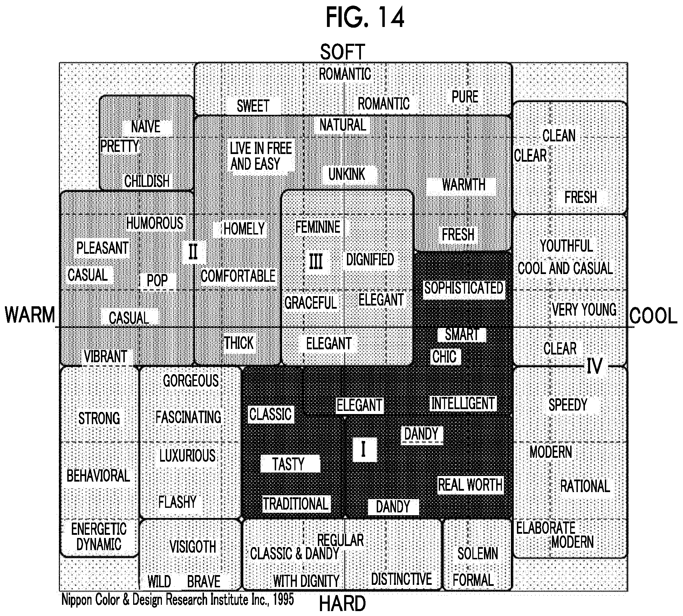

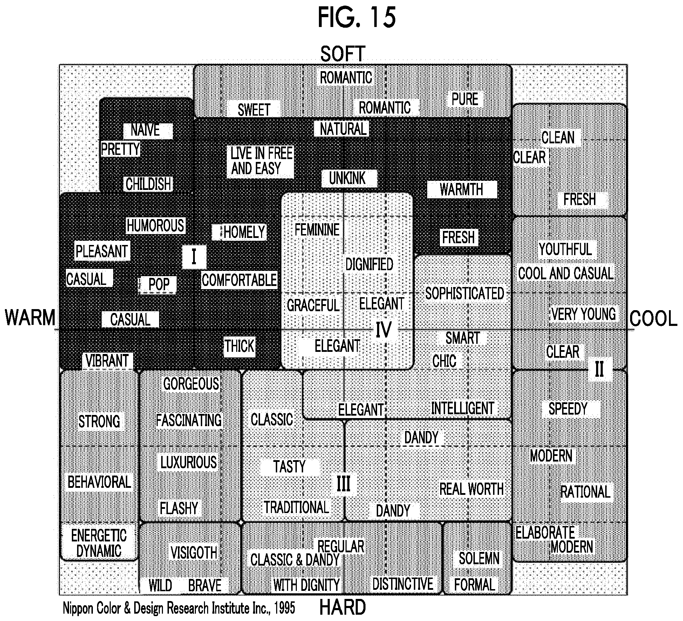

In Figs. 13 to 15, a heat map showing the correlation between the frequency at which the product is put in the shopping cart and the sensitivity word of the product described with reference to Fig. 12 is created for each providing source. That is, Fig. 12 illustrates the correlation between the frequency at which the product is put in the shopping cart and the sensitivity word of the product in company A which is the providing source, Fig. 13 illustrates the correlation between the frequency at which the product is put in the shopping cart and the sensitivity word of the product in company B which is the providing source, Fig. 14 illustrates the correlation between the frequency at which the product is put in the shopping cart and the sensitivity word of the product in company C which is the providing source, and Fig. 15 illustrates the correlation between the frequency at which the product is put in the shopping cart and the sensitivity word of the product in company D which is the providing source.

Thus, it is possible to recognize a tendency of products put in the shopping cart for each providing source from the sensitivity word by generating the heat map indicating the correlation between the frequency at which the product is put in the shopping cart and the sensitivity word of the product for each providing source. Further, Figs. 12 to 15 may be displayed simultaneously. It is easier for a comparison for each providing source to be performed due to the simultaneous display of Figs. 12 to 15.

It is understood that the present invention is not limited to the above-described embodiments and various modifications can be made without departing from the spirit of the present invention.

## Claims

1. A statistical data generation server device, comprising:
a server reception unit that receives a user operation on a network with respect to products in an electronic commerce;
an accumulation unit that accumulates an operation history of the products corresponding to the user operation received by the server reception unit;
a population generation unit that generates a population for generating statistical data, the population being a population consisting of the products, on the basis of the operation history accumulated in the accumulation unit;
a design feature amount acquisition unit that acquires a design feature amount obtained by analyzing an image of the product for each product included in the population generated by the population generation unit; and
a statistical data generation unit that generates statistical data obtained by classifying the products on the basis of the design feature amount acquired for each product, the statistical data being statistical data indicating a frequency distribution obtained by classifying the products according to the design feature amount.

2. The statistical data generation server device according to claim 1, further comprising:
a product database that registers and updates product information regarding at least products on sale.

3. The statistical data generation server device according to claim 1 or 2,
wherein the server reception unit receives an operation including at least one of a product order operation, a coordination operation for performing a combination of a plurality of products, an operation for registration in favorites of products, an operation for viewing detailed information of a product, an operation indicating high evaluation of a product, an operation for recommendation to others, or an operation for registration in a shopping cart.

4. The statistical data generation server device according to any one of claims 1 to 3,
wherein store information of the product is linked to the product, and
the population generation unit generates the population on the basis of the store information.

5. The statistical data generation server device according to claim 4,
wherein the statistical data generation unit generates a plurality of items of statistical data for each of the store information.

6. The statistical data generation server device according to claim 4 or 5,
wherein the store information linked to the product is information on an apparel-related store.

7. The statistical data generation server device according to any one of claims 1 to 6,
wherein sales strategy information of the product is linked to the product, and
the population generation unit generates the population on the basis of the sales strategy information.

8. The statistical data generation server device according to any one of claims 1 to 7, further comprising:
a product database that registers and updates product information regarding at least products on sale,
wherein the product information registered in the product database includes identification information of the product, an image of the product, and the design feature amount obtained by analyzing the image of the product, and
the design feature amount acquisition unit acquires the design feature amount associated with the identification information of the product from the product database on the basis of the identification information of the product included in the population generated by the population generation unit.

9. The statistical data generation server device according to any one of claims 1 to 8,
wherein the design feature amount includes at least one of a physical amount of an image of the product or information on a sensitivity word associated with the physical amount.

10. The statistical data generation server device according to claim 9,
wherein the physical amount of the image of the product includes at least one of information on color of the product, information on a pattern of the product, information on a texture of the product, or information on a shape of the product.

11. The statistical data generation server device according to any one of claims 1 to 10,
wherein the design feature amount acquisition unit acquires the design feature amount again for the population for which the statistical data has been already generated, and
the statistical data generation unit generates statistical data again for the population for which the statistical data has been already generated on the basis of the design feature amount acquired in the design feature amount acquisition unit.

12. A statistical data generation system in which the statistical data generation server device according to any one of claims 1 to 11 and a client terminal are connected via a network.

13. The statistical data generation system according to claim 12,
wherein the client terminal includes a display unit, and a display control unit that simultaneously displays the statistical data generated by the statistical data generation unit and a web page on a network on the display unit.

14. The statistical data generation system according to claim 13,
wherein the display control unit display-controls the statistical data in a heat map display.

15. The statistical data generation system according to claim 14,
wherein the heat map display in which the display control unit display-controls has an axis of a sensitivity word.

16. A statistical data generation method, comprising:
a server reception step of receiving a user operation on a network with respect to products in an electronic commerce;
an accumulation step of accumulating an operation history of the products corresponding to the user operation received in the server reception step;
a population generation step of generating a population for generating statistical data, the population being a population consisting of the products, on the basis of the operation history accumulated in the accumulating step;
a design feature amount acquisition step of acquiring a design feature amount obtained by analyzing an image of the product for each product included in the population generated in the population generation step; and
a statistical data generation step of generating statistical data obtained by classifying the products on the basis of the design feature amount acquired for each product, the statistical data being statistical data indicating a frequency distribution obtained by classifying the products according to the design feature amount.
